# EUROPÄISCHE PATENTSCHRIFT

(11) **EP 2 402 352 B1**
(45) Veröffentlichungstag und Bekanntmachung des Hinweises auf die Patenterteilung: **27.03.2013**
(21) Anmeldenummer: 11172355.7
(22) Anmeldetag: 01.07.2011
(51) Int. Cl.: C07F 7/21

(54) **Herstellung von 1,3,5-Triethyl-2,4,6-Trihydrido-2,4,6-Triethylamino-1,3,5-Triaza-2,4,6-Trisila-Cyclohexan**
Preparation of 1,3,5-triethyl-2,4,6-trihydrido-2,4,6-triethylamino-1,3,5-triaza-2,4,6-trisilacyclohexane
Fabrication de 1,3,5-triéthyle-2,4,6-trihydrido-2,4,6-triéthylamino-1,3,5-triaza-2,4,6-trisila-cyclohexane

(30) Priorität: 02.07.2010 DE 102010030895
(43) Veröffentlichungstag der Anmeldung: 04.01.2012
(73) Patentinhaber: Wacker Chemie AG, 81737 München (DE)
(72) Erfinder: Knies, Dr. Wolfgang, 84489 Burghausen (DE); Eiblmeier, Hans, 84489 Burghausen (DE)
(74) Vertreter: Gössmann, Christoph Tassilo

(56) Entgegenhaltungen:
- SERGEEVA Z I ET AL: "A new method of synthesis of organosilicon hydrazines", ZHURNAL OBSHCHEI KHIMII, NAUKA, MOSCOW, RU, Bd. 32, 1. Januar 1962 (1962-01-01), Seiten 1987-1993, XP009151147, ISSN: 0044-460X

## Beschreibung

In der Halbleiterfertigung ist man aufgrund neuerer Methoden zur Erzeugung von SiO-, SiN-, SiON- und SiOC-Schichten auf der Suche nach reaktiven Verbindungen, die entweder in CVD-Verfahren (chemical vapour deposition, CVD) direkt abgeschieden werden können, oder im ALD -Verfahren (atomic layer deposition, ALD) aufgebracht und in einem folgenden Reaktionsschritt abreagiert werden können.

Eine hierfür geeignete Molekülgruppe sind Aminosilane oder Silazane. Neben den monomeren Verbindungen sind auch Oligosilane untersucht worden.

Die im Titel aufgeführte Verbindung (im Folgenden kurz Trisilazan bezeichnet) wurde zwar schon 1962 von Sergeeva e.a. (ZH. Obschei Khimii 1962, 32, 1987 ff) erwähnt und einige ihrer Eigenschaften beschrieben, eine Synthese wurde jedoch nicht beschrieben.

Gegenstand der Erfindung ist ein Verfahren zur Herstellung von 1,3,5-Triethyl-2,4,6-Trihydrido-2,4,6-Triethylamino-1,3,5-Triaza-2,4,6-Trisila-Cyclohexan, wobei Trichlorsilan mit Ethylamin in einem Lösemittel umgesetzt wird.

Es wurde nun gefunden, dass bei der Umsetzung von Trichlorsilan mit Ethylamin in einem Lösemittel, das zunächst erwartete Tris(Ethylamino)Silan ((EtNH)₃SiH) nur in geringem Ausmaß entsteht, sondern bevorzugt das Trisilazan.

Das Lösemittel ist vorzugsweise ein aliphatischer Kohlenwasserstoff mit vorzugsweise C₄ bis C₁₅, bevorzugt C₅ bis C₁₀, besonders bevorzugt C₆ bis C₈, wobei Pentan, Hexan, Heptan, Oktan, Isooktan, Nonan, Dekan bevorzugt sind, besonders bevorzugt ist Isohexan.

Das erfindungsgemäße Verfahren wird vorzugsweise bei einer Temperatur unter 20°C, bevorzugt unter 5°C, besonders bevorzugt unter -10°C bis -50°C und einem Druck von 900 bis 1100 hPa durchgeführt.

Das Ethylamin wird vorzugsweise in den Gasraum des Reaktors eingeleitet und die Dosierung wird vorzugsweise so gewählt, dass die Innentemperatur des Reaktors -10°C nicht übersteigt.

Bezogen auf ein Mol Trichlorsilan werden 6 bis 10 Mol Ethylamin, besonders bevorzugt 6,2 bis 7 mol Ethylamin und 200 bis 1500 g Lösemittel, besonders bevorzugt 800 bis 1000 g Lösemittel verwendet.

Am Ende der Reaktion wird die erhaltene Suspension vorzugsweise filtriert und vorzugsweise mit Lösemittel nachgewaschen und die erhaltene Lösung wird vorzugsweise destilliert, dabei sind die Destillationsbedingungen derart, dass die Temperatur vorzugsweise unter 320°C, besonders bevorzugt bei 100 bis 150°C liegt, wobei der Druck vorzugsweise Normaldruck bei 900 bis 1100 hPa bis Vakuum ist, besonders bevorzugt unter 1 mbar liegt.

Im Rahmen der vorliegenden Erfindung beziehen sich alle Angaben von Teilen und Prozentsätzen, soweit nicht anders angegeben, auf das Gewicht. Sofern nicht anders angegeben, wird bei einem Druck der umgebenden Atmosphäre, also bei etwa 900 bis 1100 hPa, und sofern nicht anders angegeben bei Raumtemperatur, also etwa 20°C bzw. einer Temperatur, die sich beim Zusammengeben der Reaktanden bei Raumtemperatur ohne zusätzliche Heizung oder Kühlung einstellt, gearbeitet. Alle angeführten Viskositätsangaben sollen sich auf eine Temperatur von 25°C beziehen.

### Beispiel

In einem Doppelmantelgefäß mit Rührer, Intensivkühler, Thermofühler und Zutropfleitung wurden 1410 g Isohexan vorgelegt. Hierzu wurden 244 g Trichlorsilan gegeben. Anschließend wurde die Lösung auf -40°C abgekühlt und 550 g Ethylamin in den Gasraum des Reaktors eingeleitet. Die Dosierung wurde so gewählt, dass die Innentemperatur des Reaktors -10°C nicht überstieg. Es bildete sich eine weiße Suspension, die langsam auf 20°C erwärmt wurde. Anschließend wurde die Suspension filtriert, der Feststoff mit weiterem Isohexan nachgewaschen und die erhaltene Lösung destilliert. Bei etwa 130°C und 0,1 mbar Druck wurde eine Fraktion erhalten, die das Trisilazan in einer Reinheit von über 98% (bestimmt über Gaschromatographie) enthielt.

## Patentansprüche

1. Verfahren zur Herstellung von 1,3,5-Triethyl-2,4,6-Trihydrido-2,4,6-Triethylamino-1,3,5-Triaza-2,4,6-Trisila-Cyclohexan, **dadurch gekennzeichnet, dass** Trichlorsilan mit Ethylamin in einem Lösemittel umgesetzt wird.

2. Verfahren nach Anspruch 1, **dadurch gekennzeichnet, dass** das Lösemittel ein aliphatischer Kohlenwasserstoff mit C₅ bis C₁₀ ist.

3. Verfahren nach einem oder mehreren der vorhergehenden Ansprüchen, **dadurch gekennzeichnet, dass** das Lösemittel vorgelegt wird und Trichlorsilan zugegeben wird, wobei anschließend die Lösung auf -10 bis -50°C abgekühlt und Ethylamin in den Gasraum des Reaktors eingeleitet wird und die Dosierung so gewählt wird, dass die Innentemperatur des Reaktors -10°C nicht übersteigt.

## Claims

1. Process for preparing 1,3,5-triethyl-2,4,6-trihydrido-2,4,6-triethylamino-1,3,5-triaza-2,4,6-trisilacyclohexane, **characterized in that** trichlorosilane is reacted with ethylamine in a solvent.

2. Process according to Claim 1, **characterized in that** the solvent is an aliphatic hydrocarbon with C₅ to C₁₀·

3. Process according to one or more of the preceding claims, **characterized in that** the solvent is initially charged and trichlorosilane is added, then the solution is cooled to -10 to -50°C and ethylamine is introduced into the gas space of the reactor, and the metered addition is selected such that the internal temperature of the reactor does not exceed -10°C.

## Revendications

1. Procédé pour la préparation de 1,3,5-triéthyl-2,4,6-trihydrido-2,4,6-triéthylamino-1,3,5-triaza-2,4,6-trisilacyclohexane, **caractérisé en ce qu'**on fait réagir du trichlorosilane avec de l'éthylamine dans un solvant.

2. Procédé selon la revendication 1, **caractérisé en ce que** le solvant est un hydrocarbure aliphatique en C₅-C₁₀ ·

3. Procédé selon une ou plusieurs des revendications précédentes, **caractérisé en ce qu'**on dispose au préalable le solvant et on ajoute du trichlorosilane, en refroidissant ensuite la solution jusqu'à une température de -10 à -50 °C puis en introduisant de l'éthylamine dans l'espace gazeux du réacteur et en choisissant l'addition dosée de manière que la température interne du réacteur n'excède pas -10 °C.
